(19) Europäisches Patentamt
European Patent Office
Office européen des brevets

(11) Numéro de publication: **0 507 036 A1**

(12) **DEMANDE DE BREVET EUROPEEN**

(21) Numéro de dépôt: **91400928.7**

(51) Int. Cl.5: **C08F 8/34**, C08F 293/00

(22) Date de dépôt: **05.04.91**

(43) Date de publication de la demande:
**07.10.92 Bulletin 92/41**

(84) Etats contractants désignés:
**AT BE CH DE DK ES FR GB GR IT LI LU NL SE**

(71) Demandeur: **ELF ATOCHEM S.A.**
**4 & 8, Cours Michelet La Défense 10**
**F-92800 Puteaux(FR)**

(72) Inventeur: **Clouet, Gilbert**
**6 Rue des Jardins**
**F -67610 La Wantzenau(FR)**

(74) Mandataire: **Leboulenger, Jean et al**
**ATOCHEM Département Propriété**
**Industrielle Cédex 42- La Défense 10**
**F-92091 Paris la Défense(FR)**

(54) **Polymères à fonctions disulfure de thiurame pendantes, leur fabrication, et leur application à la fabrication de copolymères greffés.**

(57) Ces polymères sont constitués par un enchaînement de motifs :

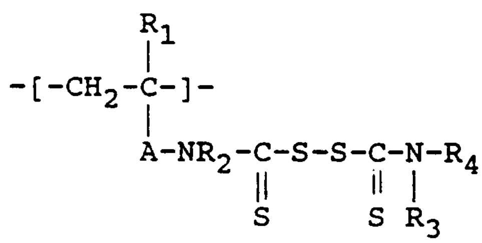

(I)

cet enchaînement pouvant comporter, distribués au hasard, d'autres motifs issus d'au moins un monomère vinylique, $R_1$ = H ; alkyle, cycloalkyle ou aryle éventuellement substitué par au moins un halogène ;

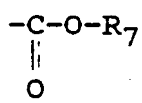 ($R_7$ = H,

alkyle, cycloalkyle ou aryle) ;
A = simple liaison ; alkylène, cycloàlkylène ou arylène ; ou

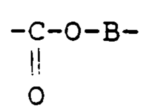

(B = alkylène, cycloalkylène ou arylène) ;
$R_2$, $R_3$ et $R_4$ = alkyle, cycloalkyle ou aryle ; au moins l'un parmi $R_3$ et $R_4$ pouvant représenter une séquence polyoxyéthylène ou polyester.

Ces polymères servent de base à la préparation de copolymères greffés comportant les motifs de formule :

EP 0 507 036 A1

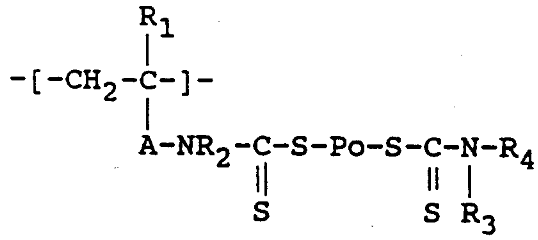

(VI)

où Po = séquence polymère vinylique ou diénique,
et d'autres motifs vinyliques. Ces copolymères greffés sont utiles notamment comme compatibilisants.

La présente invention porte sur des homopolymères et copolymères à fonctions disulfure de thiurame pendantes, sur un procédé de fabrication de ces polymères, et sur leur utilisation corne agents ayant la triple fonction d'initiateur, d'agent de transfert de chaîne et d'agent de terminaison (désignés par l'abréviation ≪iniferters≫) dans la polymérisation radicalaire de monomères vinyliques et diéniques conduisant à des copolymères greffés.

La présente invention porte d'abord sur des polymères constitués par un enchaînement de motifs :

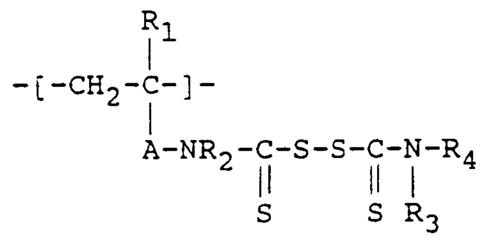

(I)

cet enchaînement pouvant comporter, distribués au hasard, d'autres motifs issus d'au moins un monomère vinylique, où :

- $R_1$ représente un atome d'hydrogène ou un radical organique monovalent choisi parmi : un radical alkyle, cycloalkyle ou aryle ou une combinaison d'au moins deux de ces restes ; un radical

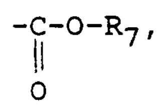

  $R_7$ représentant hydrogène, un reste alkyle, cycloalkyle ou aryle ou une combinaison d'au moins deux de ces restes; ou un radical alkyle, cycloalkyle ou aryle ou une combinaison d'au moins deux d'entre eux, substitué par au moins un atome d'halogène, par exemple, un radical trifluoro-3,3,3 propyle ;
- A représente une simple liaison ; un reste alkylène, cycloalkylène ou arylène ou une combinaison d'au moins deux de ces restes ; ou un reste

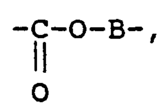

  B représentant un reste alkylène, cycloalkylène ou arylène ou une combinaison d'au moins deux de ces restes ;
- $R_2$, $R_3$ et $R_4$ représentent chacun indépendamment un reste alkyle, cycloalkyle ou aryle, ou une combinaison d'au moins deux de ces restes ; au moins l'un parmi $R_3$ et $R_4$ pouvant en outre porter au moins une fonction hydroxyle ou acide carboxylique ou représenter une séquence polyoxyéthylène ou polyester issue respectivement d'un polyoxyéthylène ou d'un polyester termine par une fonction hydroxyle ;

les restes alkyle, cycloalkyle, aryle ou leurs combinaisons, alkylène, cycloalkylène, arylène, ou leurs combinaisons, entrant dans les définitions données ci-dessus pouvant comporter au moins un hététéroatome, tel que O ou S, et/ou au moins un reste

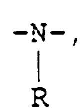

R représentant alkyle, cycloalkyle ou aryle ou une combinaison d'au moins deux de ces restes.

Comme autres motifs vinyliques, on peut mentionner des motifs de formule :

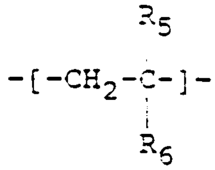 (II),

où $R_5$ et $R_6$ représentent hydrogène, un reste alkyle, cycloalkyle ou aryle ou une combinaison d'au moins deux de ces restes ; un radical alkyle, cycloalkyle ou aryle ou une combinaison d'au moins deux de ces restes, substitué par au moins un atome d'halogène ; un reste -C≡N ;

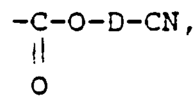

avec D = alkylène, cycloalkylène, arylène ou une combinaison d'au moins deux de ces restes ;

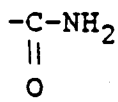 ; 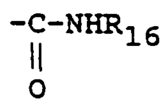

ou

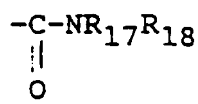

avec $R_{16}$, $R_{17}$ et $R_{18}$ représentant un reste alkyle, cycloalkyle ou aryle ou une combinaison d'au moins deux de ces restes ; ou un reste pyridinique ; avec la condition que $R_5$ et $R_6$ ne représentent jamais simultanément hydrogène.

On peut également mentionner les motifs issus de l'anhydride maléique et des maléimides substitués sur l'azote par un reste alkyle, cycloalkyle ou aryle.

Les masses moléculaires de ces homopolymères et copolymères statistiques sont comprises notamment entre 500 et 2 000 000. La teneur en motif (I) peut varier dans de larges limites, car il peut y avoir au moins un motif (I) par chaîne de copolymère.

Les groupes alkyle entrant dans les définitions ci-dessus sont notamment des groupes alkyle en $C_1$-$C_{12}$, en particulier, en $C_1$-$C_6$ ; les groupes cycloalkyle sont notamment des groupes cycloalkyle en $C_3$-$C_{12}$, en particulier, en $C_1$-$C_7$ ; et les groupes aryle sont, par exemple, les groupes phényle ou naphtyle. Par ailleurs, lorsqu'on indique qu'un groupe peut signifier un reste alkyle, cycloalkyle ou aryle, ou un reste alkylène, cycloalkylène ou arylène, on entend également les combinaisons d'au moins deux de ces restes, par exemple, un reste aralkyle, alkaryle, etc.

La séquence polyalkylène entrant dans la définition de $R_3$ ou $R_4$ peut être issue des polyoxyalkylènes suivants, par suppression de la fonction OH terminale :

$R_8$-O-(-$CH_2$-$CH_2$-O-)$_a$-$CH_2$-$CH_2$-OH

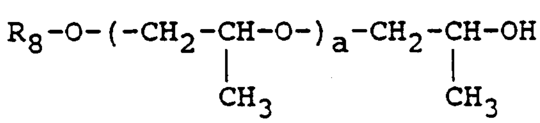

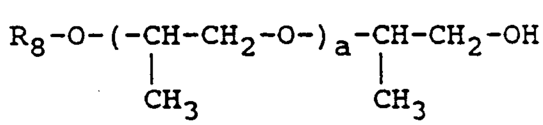

$R_8$-O-(-$(CH_2)_4$-O-$)_a$-$(CH_2)_4$-OH

où :

- $R_8$ représente un reste alkyle, cycloalkyle ou aryle ; ou une combinaison d'au moins deux de ces restes, et
- a vaut de 1 à 1000, de préférence, de 1 à 200.

La séquence polyester entrant dans la définition de $R_5$ peut être issue des polyesters suivants, par suppression de la fonction OH terminale :

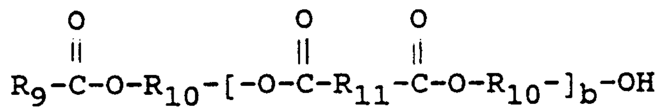

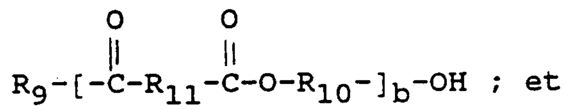

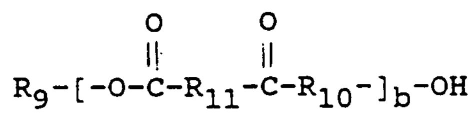

où :

- $R_9$ est tel que défini ci-dessus pour $R_8$ ;
- $R_{10}$ et $R_{11}$ représentent chacun indépendamment un reste alkylène, cycloalkylène, arylène, alcénylène, arylène substitué par alcényle, ces restes pouvant comprendre au moins un hétéroatome et/ou au moins un reste

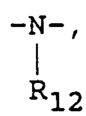

$R_{12}$ étant choisi parmi les groupes alkyle, cycloalkyle et aryle, et pouvant comporter des substituants ; et
- b vaut de 1 à 300, de préférence, de 1 à 50.

On peut mentionner, comme exemples de restes $R_{10}$ et $R_{11}$ qui comportent au moins une insaturation, les restes :

. -CH = CH-

. $-CH_2-CH = CH-CH_2-$

. 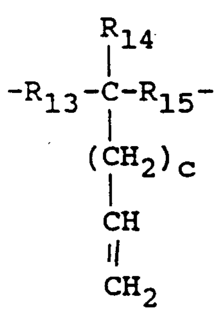 . 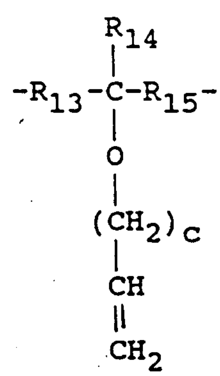 . 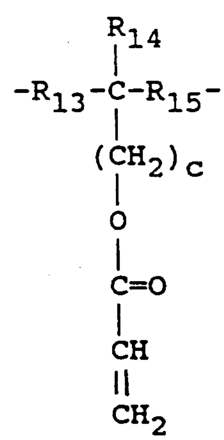

- c valant de 1 à 12 ;
- $R_{13}$ et $R_{15}$ représentant chacun indépendamment une simple liaison, un reste alkylène, cycloalkylène ou arylène ou une combinaison d'au moins deux de ces restes ;
- $R_{14}$ représentant hydrogène, alkyle, cycloalkyle ou aryle ou une combinaison d'au moins deux de ces restes ;

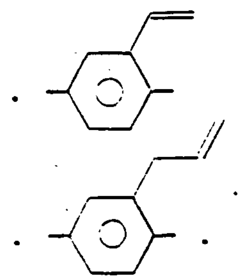
,

La présente invention a également pour objet un procédé de fabrication de ces polymères, caractérisé par le fait que :

- dans une première étape, on conduit la polymérisation d'au moins un monomère de formule :

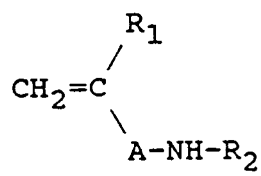
(III)

ou

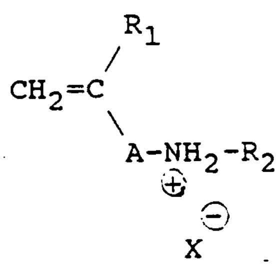
(III')

X représentant un contre-ion, tel qu'halogène ou un reste d'acide, comme $HSO_3^{\ominus}$, et le cas échéant, d'au moins un comonomère vinylique ;

- dans une seconde étape, on fait réagir le polymère obtenu comportant des motifs :

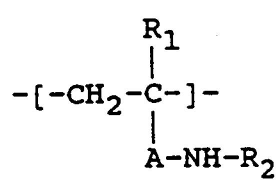
(IV)

ou

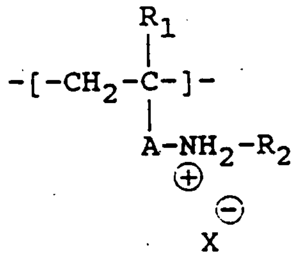 (IV')

et, le cas échéant, des motifs issus du ou des comonomères,
en présence d'au moins un agent oxydant, avec le disulfure de carbone et un composé de formule :

$R_3$-NH-$R_4$ (V) ou

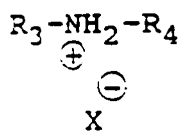 (V')

Comme monomères de formule (III), on peut citer, entre autres, le méthacrylate de N-t.butylaminoéthyle, le méthacrylate de N-1-butylaminoéthyle, le méthacrylate de N-éthylaminoéthyle, le méthacrylate de N-méthylaminoéthyle et les acrylates correspondants.

Comme comonomères, on peut citer, entre autres, les méthacrylates et acrylates d'alkyle, dont le groupe alkyle comporte, par exemple, de 1 à 8 atomes, les hydrocarbures vinylaromatiques, les nitriles insatures, les acrylates de cyanoéthyle, l'acrylamide, les acrylates et méthacrylates d'hydroxyalkyle inférieurs, l'acide acrylique et l'acide méthacrylique, l'anhydride maléique et les maléimides substitués par des groupes alkyle ou aryle. En particulier, on peut mentionner les méthacrylates de méthyle, d'éthyle, d'isopropyle, de n-butyle, de n-hexyle, d'éthyl-2 hexyle, d'isopropyle, d'isobutyle et de tert.-butyle, le styrène, l'alphaméthylstyrène, le monochlorostyrène, le tertiobutylstyrène, le vinyltoluène, la vinyl-2 pyridine et la vinyl-4 pyridine, etc.

Comme exemples non limitatifs d'amines de formule (V), on peut citer plus particulièrement la diéthylamine, la diméthylamine, la N-éthyl-N-méthylamine, la N-méthyl-N-propylamine, la N-éthyl-N-propylamine, la dipropylamine, la di-isopropylamine et la cyclopentylamine.

On va maintenant indiquer des modes de réalisation préférés des deux étapes de ce procédé.

## Première étape

On conduit la polymérisation, soit en masse, soit en suspension, soit en émulsion, soit en milieu solvant, à une température comprise, par exemple, entre environ 30 et 150 ° C. Le solvant est choisi parmi ceux capable de solubiliser la chaîne de polymère, par exemple, le tétrahydrofuranne, le toluène, l'éthanol et leurs mélanges.

L'initiateur est choisi parmi des générateurs de radicaux libres comme les peroxydes, les azoïques, les peracides, les systèmes Redox. La polymérisation peut être réalisée photochimiquement ou radiochimiquement.

## Seconde étape

Conformément à des modes de réalisation préférés, on utilise une quantité équimoléculaire de $CS_2$ à la totalité des groupes amine secondaire : ceux portés par les motifs (IV) et (IV') du polymère de la dernière étape, plus ceux portés par le composé de formule (V) ou (V'), ces derniers étant utilisés dans un excès moiaire important par rapport à (IV) ou (IV'), la réaction pouvant être effectuée en présence d'une amine tertiaire (par exemple, la triéthylamine ou la pyridine), à raison d'environ 1 mole par mole du composé (III) ou à raison d'environ 2 moles par mole du composé (III'). L'agent oxydant est ajouté, par exemple, à raison d'environ 1 mole par mole de $CS_2$. Il peut être choisi, entre autres, parmi l'iode, l'eau oxygénée, les hypochlorites de métaux alcalins et les hydroperoxydes d'alkyle et d'aryle, et l'hexacyanoferrate de potassium.

La réaction peut être conduite en milieu solvant, par exemple, dans l'eau, un alcool ou un mélange eau-alcool, $CS_2$ ou l'amine tertiaire pouvant du reste faire office de solvant. La réaction est conduite généralement à une température se situant entre environ -20 ° C et la température ambiante.

La présente invention porte également sur des copolymères greffés dont les greffons comportent des séquences vinyliques ou diéniques, ces copolymères étant constitués par un enchaînement de motifs :

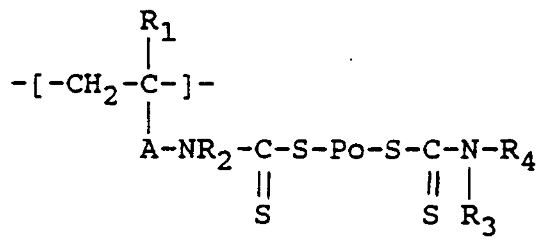

(VI)

où Po représente une séquence polymère vinylique ou diénique,
cet enchaînement pouvant comporter, distribués au hasard, des motifs issus d'au moins un autre monomère vinylique.

Les masses moléculaires de la séquence Po sont généralement comprises entre environ 100 et 1000000, de préférence entre 1000 et 100000.

L'invention porte aussi sur un procédé de fabrication de ces copolymères greffés, caractérisé par le fait qu'on conduit la polymérisation d'un monomère vinylique ou diénique à une température d'environ 50 à 160 ° C en présence d'un polymère iniferter tel que défini ci-dessus, ce dernier étant introduit, de préférence en début de polymérisation avec les monomères.

La quantité de polymère iniferter introduite est généralement comprise entre $10^{-5}$ et 0,5 mole/1 par rapport aux monomères vinyliques et diéniques.

Comme monomères vinyliques, on peut citer ceux mentionnés ci-dessus.

Comme monomères diéniques, on peut mentionner, entre autres, le butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylidène-2-norbornène, le 5-(2-propényl)-2-norbornène, le 5-(5-hexényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Ces copolymères greffés peuvent servir de compatibilisant à un mélange d'homopolymères PA et PB, auquel cas la séquence $P_o$ sera de même nature chimique que PA par exemple, le monomère B étant de même nature que le comonomère qui a servi à constituer le polymère de l'invention.

Les exemples suivants illustrent la présente invention sans toutefois en limiter la portée.

## Exemples 1 à 6

Copolymérisation radicalaire de méthacrylate de méthyle (MMA) avec le méthacrylate de N-t.butylaminoéthyle (Matbae) (Ex. 1 à 3) et du méthacrylate de n-butyle (MMB) avec le Matbàe (Ex. 4 à 6).

## Mode opératoire général

Les copolymérisations ont été réalisées en masse ou en solution dans du benzène, du tétrahydrofuranne (THF) ou du diméthylformamide (DMF) à une concentration de l'ordre de 2 moles/1 de monomère et une concentration en amorceur (azoïque ou peroxydique) de l'ordre de 2 x $10^{-3}$ mole/1. Les copolymérisations sont effectuées, à l'abri de la lumière, dans des ballons munis d'une agitation, qui sont scellés sous vide ou maintenus sous gaz inerte ($N_2$, argon) après introduction des réactifs. On conduit la polymérisation en immergeant le ballon dans un bain d'huile thermostaté à la température requise et pendant le temps désiré. Après copolymérisation, le ballon est retiré, réfrigéré dans un mélange isopropanol-carboglace. Le polymère et dilué dans du toluène, du THF ou tout autre solvant, puis il est précipité goutte à goutte dans de l'heptane ou du méthanol. Le précipité ou le produit résineux obtenu est recueilli dans un creuset en verre fritté, lavé à l'heptane ou au méthanol, séché à 45 ° C sous vide jusqu'à poids constant (pendant 12 à 24 heures).

Réactions de polymérisation réalisées à 60 °C ± 5 °C pour des temps de polymérisation compris entre 45 et

90 minutes en solution dans le toluène

| Ex. | Monomères M1 | Monomères M2 | Fraction molaire de M2 dans le mélange réactionnel | $\overline{Mn} \times 10^{-4}$ | * I | Fraction molaire de M2 dans le copolymère |
|---|---|---|---|---|---|---|
| 1 | MMA | Matbae | 0,1 | 9,6 | 1,36 | 0,101 |
| 2 | MMA | " | 0,4 | 10,9 | 1,53 | 0,41 |
| 3 | " | " | 0,7 | 11,5 | 1,58 | 0,695 |
| 4 | MMB | Matbae | 0,1 | 18,4 | 1,97 | 0,23 |
| 5 | " | " | 0,25 | 10,3 | 2,85 | 0,50 |
| 6 | " | " | 0,55 | 6,4 | 3,20 | 0,83 |

* I = indice de polydispersité

Exemples 7a et 7b

Synthèse de ≪polyiniferters≫ à groupe thiurame pendants

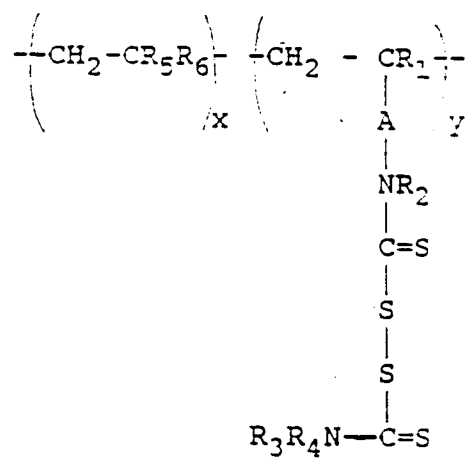

Exemple 7a)

15 g (1,56 x $10^{-4}$ mole) du copolymère de l'Exemple 1 (contenant 1,56 x $10^{-5}$ mole d'amine secondaire) est dissous dans 150 ml de toluène auquel 1 ml (1,56 x $10^{-2}$ mole) de $CS_2$, puis 1,14 g (1,56 x $10^{-2}$ mole) de diéthylamine sont additionnés. 2 g (1,56 x $10^{-2}$ mole) d'iode en solution dans 50 ml de toluène sont ensuite additionnés au milieu réactionnel maintenu à 20 ° C sous agitation.

Le mélange est agité jusqu'à disparition complète de l'iode. Il est ensuite versé dans un mélange méthanol/eau. Le précipité est redissous dans du toluène, séché et récupéré par évaporation du solvant sous vide partiel.

Exemple 7b)

4,34 g (6,78 x $10^{-5}$ mole) du copolymère de l'Exemple 6 contenant (1,56 x $10^{-5}$ mole) d'amine secondaire sont traités de manière identique à celle de l'Exemple 7a.

Exemples 8 à 15

Synthèse de copolymères greffés

Polymérisation radicalaire d'un monomère vinylique: styrène (ex. 8 à 11) et méthacrylate d'hydroxyéthyle (HEMA) (ex. 12 à 15) à partir des polyiniferters greffés des Exemples 7a et 7b.

Mode opératoire général

Les polymérisations sont effectuées dans des ballons (ou des tubes) munis d'une agitation qui sont, après introduction des réactifs, scellés sous vide ou maintenus sous gaz inerte ($N_2$, argon). (Les polyiniferters greffés obtenus aux Exemples 7a et 7b sont dissous dans du toluène). Les polymérisations sont conduites par immersion des ballons dans un bain d'huile thermostaté à la température requise, dans le temps désiré. Le ballon, à la fin de la polymérisation, est retiré du bain d'huile, réfrigéré dans un mélange isopropanol-carboglace, et le copolymère greffé est versé goutte à goutte dans de l'heptane ou du méthanol suivant le comonomère greffé. La fraction soluble est redissoute dans du toluène (ou du méthanol dans le cas de l'HEMA comme comonomère greffé) et reprécipitée dans les non-solvants adéquats.

Le copolymère greffé est ensuite séché à 45 ° C jusqu'à poids constant (24 à 48 heures).

On a effectué diverses polymérisations du styrène (Exemples 8 à 11) et de l'HÉMA (Exemples 12 à 15) en faisant varier la concentration en gramme de ≪polyiniferter greffé≫ par litre de monomère, la température et le temps de polymérisation, avec les composés issus des Exemples 7a et 7b.

Le copolymère greffé est caractérisé par sa masse moléculaire moyenne en poids ($\overline{Mw}$) et son pourcentage en poids de comonomère greffé.

| Ex. | Plg | | Temps de polym. ° C | Temps de polym. t (h) | Pourcentage en poids du monomère greffé |
|---|---|---|---|---|---|
| | Nature | conc. en g/l | | | |
| 8 | 7a | 400 | 70 | 36 | 73 |
| 9 | 7a | 200 | 80 | 24 | 36 |
| 10 | 7b | 300 | 70 | 36 | 50 |
| 11 | 7b | 100 | 80 | 24 | 80 |
| 12 | 7a | 100 | 85 | 17 | 40 |
| 13 | 7a | 100 | 85 | 26 | 61 |
| 14 | 7b | 100 | 85 | 20 | 67 |
| 15 | 7b | 100 | 85 | 33 | 80 |
| Plg : Polyiniferter greffé des Exemples 7a ou 7b | | | | | |

**Revendications**

**1.** Polymères constitués par un enchaînement de motifs :

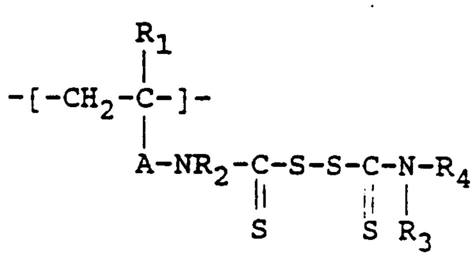

(I)

cet enchaînement pouvant comporter, distribués au hasard, d'autres motifs issus d'au moins un monomère vinylique, où :

- $R_1$ représente un atome d'hydrogène ou un radical organique monovalent choisi parmi : un

radical alkyle, cycloalkyle ou aryle ou une combinaison d'au moins deux de ces restes ; un radical

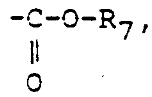

$R_7$ représentant hydrogène, un reste alkyle, cycloalkyle ou aryle ou une combinaison d'au moins deux de ces restes; ou un radical alkyle, cycloalkyle ou aryle ou une combinaison d'au moins deux d'entre eux, substitué par au moins un atome d'halogène ;

- A représente une simple liaison ; un reste alkylène, cycloalkylène ou arylène ou une combinaison d'au moins deux de ces restes ; ou un reste

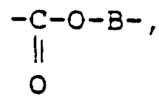

B représentant un reste alkylène, cycloalkylène ou arylène ou une combinaison d'au moins deux de ces restes ;

- $R_2$, $R_3$ et $R_4$ représentent chacun indépendamment un reste alkyle, cycloalkyle ou aryle, ou une combinaison d'au moins deux de ces restes ; au moins l'un parmi $R_3$ et $R_4$ pouvant en outre porter au moins une fonction hydroxyle ou acide carboxylique ou représenter une séquence polyoxyéthylène ou polyester issue respectivement d'un polyoxyéthylène ou d'un polyester terminé par une fonction hydroxyle ;

les restes alkyle, cycloalkyle, aryle ou leurs combinaisons, alkylène, cycloalkylène, arylène, ou leurs combinaisons, entrant dans les définitions données ci-dessus pouvant comporter au moins un hététéroatome, et/ou au moins un reste

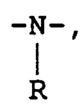

R représentant alkyle, cycloalkyle ou aryle ou une combinaison d'au moins deux de ces restes.

**2.** Polymères selon la revendication 1, caractérisés par le fait que leur masse moléculaire est comprise entre 500 et 2 000 000.

**3.** Procédé de fabrication des polymères tels que définis à la revendication 1, caractérisé par le fait que :

- dans une première étape, on conduit la polymérisation d'au moins un monomère de formule :

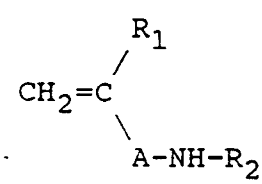 (III)

ou

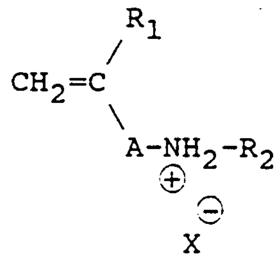 (III')

X représentant un contre-ion, et
le cas échéant, d'au moins un comonomère vinylique ;

- dans une seconde étape, on fait réagir le polymère obtenu comportant des motifs :

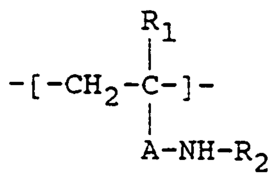 (IV)

ou

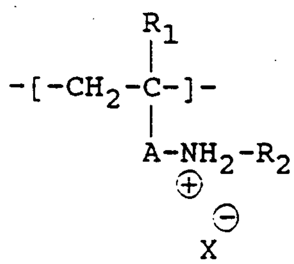 (IV')

et, le cas échéant, des motifs issus du ou des comonomères,
en présence d'au moins un agent oxydant, avec le disulfure de carbone et un composé de formule :

$R_3$-NH-$R_4$ (V) ou

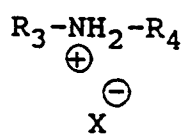 (V')

**4.** Procédé selon la revendication 3, caractérisé par le fait qu'on utilise, comme monomère de formule (III), le méthacrylate de N-t.butylaminoéthyle, le méthacrylate de N-1-butylaminoéthyle, le méthacrylate de N-éthylaminoéthyle, le méthacrylate de N-méthylaminoéthyle et les acrylates correspondants.

**5.** Procédé selon l'une des revendications 3 et 4, caractérisé par le fait qu'à la seconde étape, on utilise au moins 1 mole de $CS_2$ par groupement amine secondaire porté par les motifs (IV) ou (IV') du polymère obtenu à la première étape, et on utilise le composé de formule (V) ou (V') dans un excès molaire important.

6. Procédé selon l'une des revendications 3 à 5, caractérisé par le fait qu'on conduit la réaction de la seconde étape en présence d'une amine tertiaire, à raison d'environ 1 mode par mole du composé (III) ou à raison d'environ 2 moles par mode du composé (III').

7. Copolymères greffés dont les greffons comportent des séquences vinyliques ou diéniques, ces copolymères étant constitués par un enchaînement de motifs :

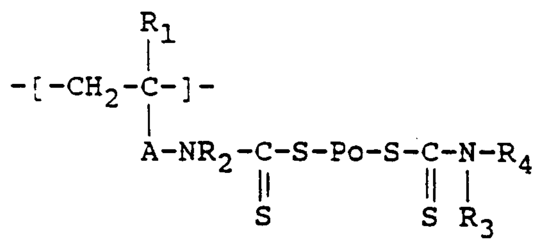

(VI)

où Po représente une séquence polymère vinylique ou diénique,
cet enchaînement pouvant comporter, distribués au hasard, des motifs issus d'au moins un monomère vinylique.

8. Polymères selon la revendication 7, caractérisés par le fait que la masse moléculaire de la séquence Po est comprise entre 100 et 1000000, de préférence entre 1000 et 100000.

9. Procédé de fabrication des copolymères greffés tels que définis à l'une des revendications 7 et 8, caractérisé par le fait qu'on conduit la polymérisation d'un monomère vinylique ou diénique en présence d'un polymère iniferter tel que défini à la revendication 1, à une température de 50 à 160 ° C.

Office européen des brevets

# RAPPORT DE RECHERCHE EUROPEENNE

Numero de la demande

EP 91 40 0928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X<br><br>Y | EP-A-0 418 118 (ATOCHEM)<br>* exemples 31-58 *<br>* le document en entier *<br>--- | 1-6<br><br>1-9 | C08F8/34<br>C08F293/00 |
| Y | EP-A-0 416 547 (MITSUBISHI PETROCHEMICAL COMPANY LIMITED)<br>* le document en entier *<br>--- | 1-9 | |
| X | DIE MAKROMOLEKULARE CHEMIE<br>vol. 192, no. 3, Mars 1991, BASEL<br>pages 579 - 590;<br>C.R. NAIR, M.C. RICHOU, G. CLOUET: 'TRIBLOCK COPOLYMERS VIA THERMAL "MACROINIFERTERS": BLOCK COPOLYMERS OF ETHYLACRYLATE OR STYRENE'<br>* le document en entier *<br>--- | 1-9 | |
| A | JOURNAL OF POLYMER SCIENCE<br>vol. 27, no. 6, Mai 1989, NEW YORK<br>pages 1795 - 1809;<br>C.P.R. NAIR, G. CLOUET, P. CHAUMONT: 'FUNCTIONALIZATION OF PMMA BY A FUNCTIONAL"INIFERTER": KINETICS OF POLYMERIZATION OF MMA USING N,N'-DIETHYL-N,N'-BIS(2-HYDROXYETHYL)THIURAM DISULFIDE'<br>* page 1795, ligne 1 - page 1797, ligne 9 *<br>--- | 1-9 | DOMAINES TECHNIQUES RECHERCHES (Int. Cl.5 )<br><br>C08F<br>C08G |
| A | EP-A-0 349 232 (MINNESOTA MINING AND MANUFACTURING COMPANY)<br>* revendications *<br>----- | 7-9 | |

Le présent rapport a été établi pour toutes les revendications

| Lieu de la recherche | Date d'achèvement de la recherche | Examinateur |
|---|---|---|
| LA HAYE | 19 NOVEMBRE 1991 | KAUMANN E. K-H. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................................
& : membre de la même famille, document correspondant

EPO FORM 1503 03.82 (P0402)